# EUROPEAN PATENT APPLICATION

(11) **EP 4 786 844 A1**
(43) Date of publication of application: **05.08.2026**
(21) Application number: 24871877.7
(22) Date of filing: 12.09.2024
(51) Int. Cl.: F17C 13/00, F16J 12/00, F17C 1/06, F17C 1/16

(54) **PRESSURE VESSEL**

(30) Priority: 28.09.2023 JP 2023167531
(71) Applicant: Yachiyo Industry Co., Ltd., Sayama-shi, Saitama 350-1335 (JP)
(72) Inventor: YOSHIOKA, Junya, Sayama-shi, Saitama 350-1328 (JP)
(74) Representative: Weickmann & Weickmann PartmbB
(86) International application number: PCT/JP2024/032638
(87) International publication number: WO 2025/070080

(57) **Abstract**

The present invention is characterized by being provided with: a liner (2) that has a cylindrical protruding part (12) that protrudes outward; a mouthpiece (4) that is fitted to the protruding part (12) and allows a valve (insertion member) (5) to be inserted thereinto; and a seal member (17) that is sandwiched between the outer peripheral surface of the protruding part (12) on the tip side and the inner peripheral surface of the mouthpiece (4), a projecting section (20) or a thick section being formed on the inner peripheral surface of the protruding part (12) at a position corresponding to the seal member (17).

## Description

### TECHNICAL FIELD

The present invention relates to a pressure vessel.

### BACKGROUND ART

A pressure vessel is known which includes a liner including a shell for holding a gas or liquid and a tubular projection projecting outward from the shell, a metallic neck fitting provided on an outer circumference of the projection and having a disk-shaped surface contact portion put in surface contact with an outer surface of the shell, and a fiber-reinforced resin layer covering an outer surface of the shell of the liner and an outer surface of the surface contact portion of the neck fitting (Patent Literature 1).

In such pressure vessels, a seal member is sometimes provided to seal between the liner and the neck fitting. However, due to the internal pressure of the fluid (pressure inside the vessel), the projection may deform in a direction away from the seal member. In Patent Literature 1, a collar member is attached to the inner circumferential surface of the projection to prevent the projection from deforming in the direction away from the seal member.

### CITATION LIST

### Patent Literature

Patent Literature 1: JP2017-166535A

### SUMMARY OF INVENTION

### Technical Problem

However, since it is necessary to attach a separate collar member to the projection, there is a problem that the number of parts and assembly steps increase, resulting in higher manufacturing costs. In addition, the collar member has poor assembly workability and is difficult to attach.

The present invention is intended to provide a pressure vessel that improves ease of assembly and sealing performance with a simple structure.

### Solution to Problem

The present invention includes: a liner having a tubular projection projecting outward; a neck fitting fitted onto the projection and in which an insert member is inserted; and a seal member held between an outer circumferential surface of a distal end portion of the projection and an inner circumferential surface of the neck fitting. On an inner circumferential surface of the projection, a protruding portion or a thick-walled portion is formed at a position corresponding to the seal member.

According to the present invention, the protruding portion or the thick-walled portion is formed on the inner circumferential surface of the projection at a position corresponding to (opposing) the seal member, so that it is possible to eliminate or extremely narrow a gap around the seal member. Further, the protruding portion or the thick-walled portion thus provided also increases the rigidity of the projection, thereby improving the sealing performance with the simple structure.

Even when the internal pressure acts on the projection in a direction away from the seal member, the protruding portion or the thick-walled portion comes into contact with an outer circumferential surface of the insert member. This makes it possible to prevent the projection from deforming in the direction away from the seal member, thereby improving the sealing performance of the pressure vessel with the simple structure. Moreover, since there is no need to provide a separate collar member as in the background art, the number of parts and assembly steps can be reduced and the ease of assembly can be improved.

### Advantageous Effects of Invention

According to a pressure vessel of the present invention, it is possible to improve the ease of assembly and the sealing performance with a simple structure.

### BRIEF DESCRIPTION OF DRAWINGS

[FIG. 1]

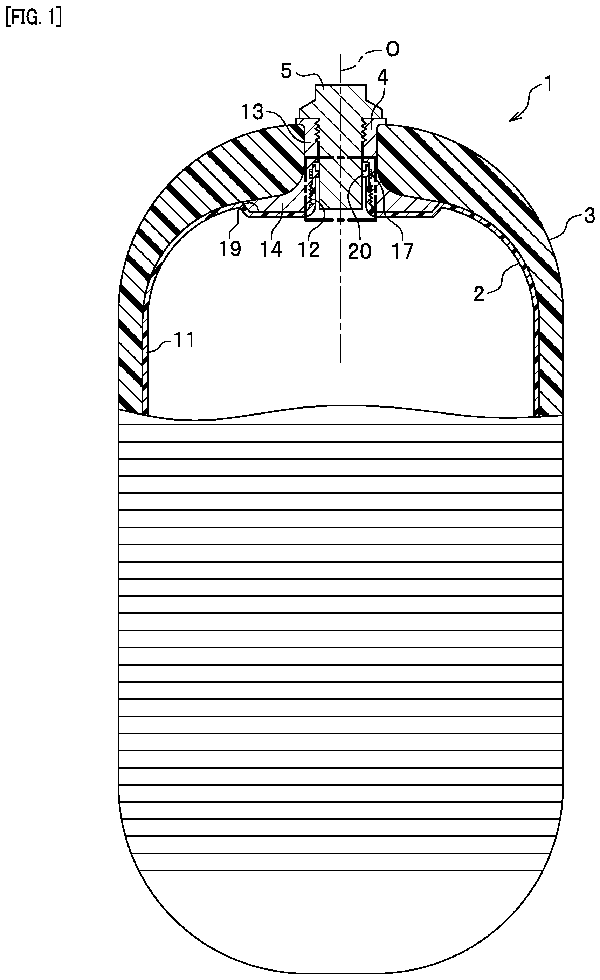

   FIG. 1 is a side cross-sectional view showing a pressure vessel according to an embodiment of the present invention.
[FIG. 2]

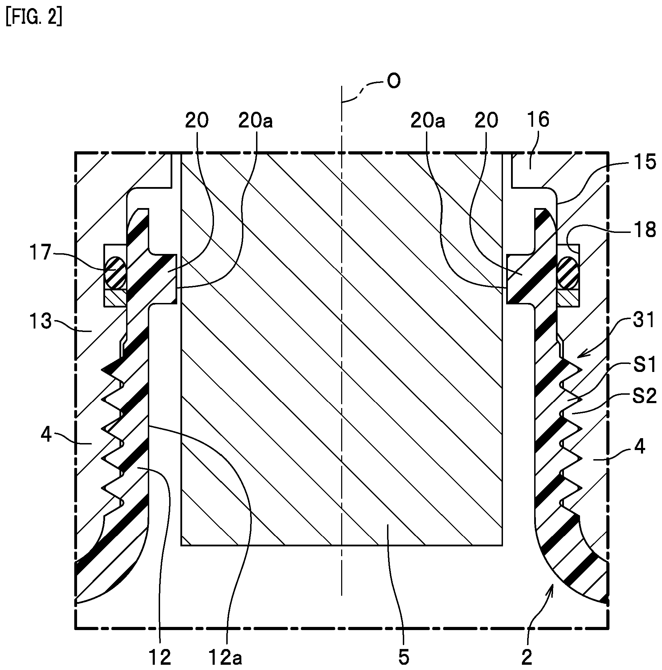

   FIG. 2 is an enlarged side cross-sectional view showing a connecting mechanism between a liner and a neck fitting.
[FIG. 3]

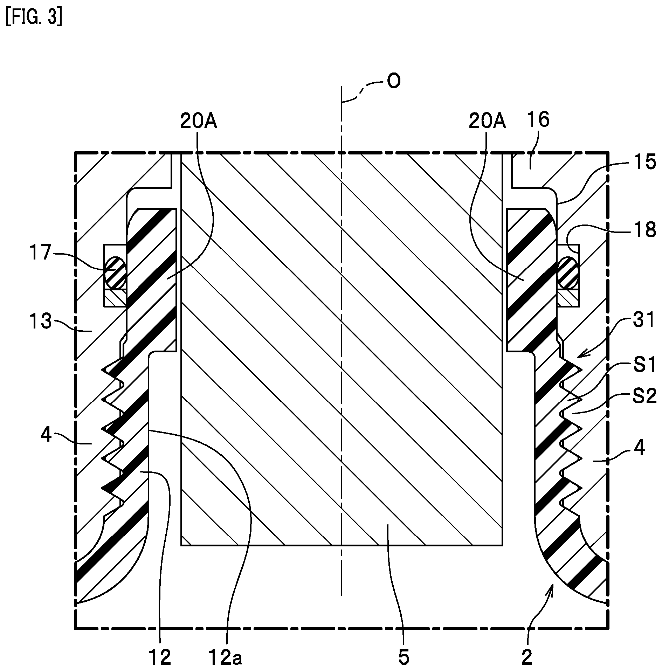

   FIG. 3 is an enlarged side cross-sectional view showing a modification of a protruding portion.

### DESCRIPTION OF EMBODIMENTS

### <<Pressure Vessel according to Embodiment>>

Hereinafter, an embodiment of the present invention will be described with reference to the accompanying drawings. In the description of the drawings, the same elements are given the same reference signs, and duplicated descriptions will be omitted as appropriate.

As shown in FIG. 1, a pressure vessel 1 according to the present embodiment is used as a vessel for holding low-pressure gas such as LPG, high-pressure gas such as hydrogen gas, or any other fluid. As shown in FIG. 1, the pressure vessel 1 of the present invention includes a liner 2, a fiber-reinforced resin layer 3, and a neck fitting 4.

The liner 2 includes a hollow cylindrical shell 11 and a tubular projection 12 formed continuously with the shell 11 so as to project outward from the shell 11. In the present embodiment, the liner 2 has a single-layer structure. The liner 2 is formed by injection molding, blow molding, or the like using a resin material such as high-density polyethylene (HDPE), polyamide, polyketone, or polyphenylene sulfide (PPS).

The fiber-reinforced resin layer 3 is made of, for example, a fiber reinforced resin (FRP: fiber-reinforced plastic) and serves to reinforce the pressure resistance strength of the liner 2. The fiber-reinforced resin layer 3 is formed on the outer surfaces of the liner 2 and the neck fitting 4 by using, for example, a filament winding method in which a fiber bundle impregnated with resin is wound and then the resin is cured.

The neck fitting 4 includes a cylindrical neck-fitting tubular portion 13 which is externally fitted over the projection 12 of the liner 2, and an annular flange portion 14 which extends outward in the radial direction from a base end of the neck-fitting tubular portion 13 on the liner 2 side. The neck-fitting tubular portion 13 and the flange portion 14 are integrally formed and are continuous with each other. The flange portion 14 is disposed in a recessed portion 19 formed in the liner 2. The outer surface of the flange portion 14 and the outer surface of the liner 2 are flush with each other. An insert member is attached to the neck fitting 4. In the example of the drawing, a valve 5 for injecting or discharging a high-pressure gas or liquid is inserted into and attached to the neck fitting 4 as the insert member.

As shown in FIG. 2, for example, a male thread S1 is formed on an outer circumferential surface of the projection 12, and a female thread S2 is formed on an inner circumferential surface of the neck fitting 4. The projection 12 and the neck fitting 4 are threadedly engaged to form a fastening mechanism 31. The fastening mechanism 31 is not limited to the structure described above.

The neck-fitting tubular portion 13 includes a neck-fitting large-diameter portion 15 having an inner diameter substantially equal to an outer diameter of the projection 12, and a neck-fitting small-diameter portion 16 located on a distal end portion (the upper side in the drawing) and projecting beyond an inner diameter of the projection 12 in a direction toward a central axis O. In the neck-fitting large-diameter portion 15, an annular seal groove 18 is formed in which a seal member 17 inserted between the liner 2 and the neck fitting 4 is accommodated. The seal member 17 is, for example, an O ring or the like, and is held between the outer circumferential surface of the distal end portion of the projection 12 and the inner circumferential surface of the neck fitting 4. A backup ring may be accommodated in the seal groove 18, adjacent to the seal member 17.

A protruding portion 20 is integrally formed on the inner circumferential surface 12a of the projection 12 of the liner 2 along the circumferential direction at a position corresponding to the seal member 17 that is disposed on the outer circumferential surface side of the projection 12. The protruding portion 20 is ring-shaped, protrudes in the direction toward the central axis O, and is continuously formed along the circumferential direction. The protruding portion 20 has a rectangular shape in a cross-sectional view. The protruding portion 20 protrudes in a direction toward the central axis O to an extent that, in an operation of inserting the valve 5, the protruding portion 20 will not interfere with the insertion of the valve 5. In other words, the inner diameter of the protruding portion 20 is equal to or slightly larger than the outer diameter of the valve 5. For example, in the case where the liner 2 is formed by injection molding, the protruding portion 20 may be formed by cutting out a portion of a gate through which the resin is injected during the injection molding. In other words, during injection molding, after resin is injected into the cavity from the central-axis-O side, the excess resin at the position of the end surface 20a is removed, thereby forming the protruding portion 20.

According to the pressure vessel 1 of the present embodiment described above, the protruding portion 20 is formed on the inner circumferential surface 12a of the projection 12 at a position corresponding to (opposing) the seal member 17, so that it is possible to eliminate or extremely narrow a gap around the seal member 17. Further, the protruding portion 20 thus provided also increases the rigidity of the projection 12, thereby improving the sealing performance with the simple structure.

Even when the internal pressure acts on the projection 12 in a direction away from the seal member 17 (the direction toward the central axis O), the protruding portion 20 comes into contact with the outer circumferential surface of the valve 5. This makes it possible to prevent the projection 12 from deforming in the direction away from the seal member 17, thereby improving the sealing performance of the pressure vessel 1 with the simple structure. Moreover, since there is no need to provide a separate collar member as in the background art, the number of parts and assembly steps can be reduced, and the ease of assembly can be improved. Furthermore, since the protruding portion 20 can be formed integrally with the liner 2, manufacturing is also facilitated. These factors contribute to reducing the manufacturing costs.

### (Modification)

A modification of the present embodiment will be described below. The present modification is different from the above-described embodiment in that a thick-walled portion 20A is provided instead of the protruding portion 20. As shown in FIG. 3, the thick-walled portion 20A protrudes toward the central axis O beyond the inner circumferential surface 12a of the projection 12 and has a thick-walled shape extending along the circumferential direction while having a rectangular cross section. The thick-walled portion 20A is formed at a position corresponding to (opposing) the seal member 17 so as to have a predetermined length (height) from the distal end of the projection 12. The inner diameter of the thick-walled portion 20A is equal to or slightly larger than the outer diameter of the valve 5. The thick-walled portion 20A can be formed easily by setting the mold in advance so that the corresponding portion of the projection 12 is thickened.

The present modification can also achieve substantially the same advantageous effects as the embodiment described above. Further, the thick-walled portion 20A increase rigidity as compared with the above-described embodiment, thereby further improving the sealing performance.

Although the embodiment of the present invention has been described above, various design modifications may be made as necessary without departing from the scope of the present invention. In the present embodiment, the protruding portion 20 and the thick-walled portion 20A are ring-shaped and rectangular in their cross-sectional views, but it is only required that they protrude in a direction toward the central axis O at a position corresponding to the seal member 17. Another possible shape is a semicircular shape or the like in a cross-sectional view. The protruding portion 20 and the thick-walled portion 20A may be formed discontinuously along the circumferential direction. For example, partial projecting portions may be arranged at equal intervals on the inner circumferential surface of the projection 12.

### Reference Signs List

- 1: pressure vessel
- 2: liner
- 3: fiber-reinforced resin layer
- 4: neck fitting
- 5: valve
- 11: shell
- 12: projection
- 13: neck-fitting tubular portion
- 14: flange portion
- 17: seal member
- 18: seal groove
- 20: protruding portion
- 20A: thick-walled portion

## Claims

1. A pressure vessel comprising:
a liner having a tubular projection projecting outward;
a neck fitting fitted onto the projection and in which an insert member is inserted; and
a seal member held between an outer circumferential surface of a distal end portion of the projection and an inner circumferential surface of the neck fitting, wherein
on an inner circumferential surface of the projection, a protruding portion or a thick-walled portion is formed at a position corresponding to the seal member.
